# EUROPEAN PATENT APPLICATION

(11) **EP 3 557 458 A1**
(43) Date of publication of application: **23.10.2019**
(21) Application number: 18305478.2
(22) Date of filing: 18.04.2018
(51) Int. Cl.: G06F 21/31, H04L 9/32, G06F 21/32

(54) **USER AUTHENTICATION SYSTEM AND CORRESPONDING ALGORITHM**

(71) Applicant: Thales Dis France SA, 92190 Meudon (FR)
(72) Inventor: FAURE, Frédéric, 13881 Gemenos cedex (FR)
(74) Representative: Scheer, Luc

(57) **Abstract**

The invention proposes a method for generating strings of characters to be displayed to a user of a terminal in order to authenticate the user through the analysis of his behaviour when typing the strings of characters on keys of a keyboard, the method comprising, during an earlier learning phase, to measure for the user:
a) The duration of the press of different keys ;
b) The duration of the keystroke between consecutive keys ;
c) The duration for typing a sequence of characters ;
the generation of strings of characters to be displayed to the user for authentication purposes taking into account points (a) to (c) for the user, the durations being each weighted between 0% and 100%, the sum of the weights being equal to 100%,
the generation diversifying at the maximum the durations that characterize precisely the user in order to authenticate the user through his behaviour when typing the strings of characters with the lowest number of characters.

## Description

The present invention concerns a user authentication system.

It is known that when a user wishes to authenticate himself, for example on an Internet site of a service provider, he has to enter a login and a password in a telecommunication terminal (a smartphone, a laptop, a PC,...) communicating with this Internet site. This represents a nightmare for the user because he has to remember a big quantity of logins and the corresponding passwords.

It is also known, for smartphones or mobile phones, to authenticate a user thanks to its fingerprint or to make a face recognition. But these technologies are managed by the OEMs (the manufacturers of the smartphones or mobile phones). There is therefore a lack of trust autonomy for service providers and it is limited to mobile applications (not possible for web applications).

Seamless authentication has got a big hype but its drawbacks are a bad user adoption (I am authenticated without knowing it) and privacy concerns (no user consent).

Finally, it is known to authenticate a user by several providers of environmental (Threatmetrix™: GPS, wifi, MNO, ...) and behavorial (BehavioSec™: way to type text, way to move the mouse) authentication factors. However, on a mobile terminal, there is no mouse and the user experience trend is to lower the number of text that he has to type.

The present invention proposes a solution to these problems.

More precisely, the invention proposes a method for generating strings of characters to be displayed to a user of a terminal in order to authenticate the user through the analysis of his behaviour when typing the strings of characters on keys of a keyboard, the method comprising, during an earlier learning phase, to measure for the user:
a) The duration of the press of different keys ;
b) The duration of the keystroke between consecutive keys ;
c) The duration for typing a sequence of characters ;
the generation of strings of characters to be displayed to the user for authentication purposes taking into account points (a) to (c) for the user, the durations being each weighted between 0% and 100%, the sum of the weights being equal to 100%,
the generation diversifying at the maximum the durations that characterize precisely the user in order to authenticate the user through his behaviour when typing the strings of characters with the lowest number of characters.

When the keyboard is a capacitive keyboard, the strength of the pressure of different keys is preferably also taken in account.

The invention also concerns a cloud based algorithm for generating strings of characters to be displayed to a user of a terminal in order to authenticate the user through the analysis of his behaviour when typing the strings of characters on keys of a keyboard, the algorithm comprising instructions for generating the string of characters based on measures done earlier during a learning phase during which, for the user, are measured :
a) The duration of the press of different keys ;
b) The duration of the keystroke between consecutive keys ;
c) The duration for typing a sequence of characters ;
the algorithm generating strings of characters to be displayed to the user for authentication purposes taking into account points (a) to (c) for the user, the durations being each weighted between 0% and 100%, the sum of the weights being equal to 100%,
the algorithm diversifying at the maximum the durations that characterize precisely the user in order to authenticate the user through his behaviour when typing the strings of characters with the lowest number of characters.

The invention will be better understood when reading the following description of the figures that represent:
- Figure 1 a keyboard;
- Figure 2, a man to machine interface.

The invention proposes to show to a user of a terminal that he needs to type text (without obligation to know it by heart, it can be words, a sentence, generally a string of characters) to authenticate himself.

The benefits are an obvious user adoption and an obvious user consent required by the General Data Protection Regulation (GDPR) compliancy.

Since typing text is annoying, the idea to select carefully the string of characters that the end user will have to type so that he could be authenticated the more quickly possible.

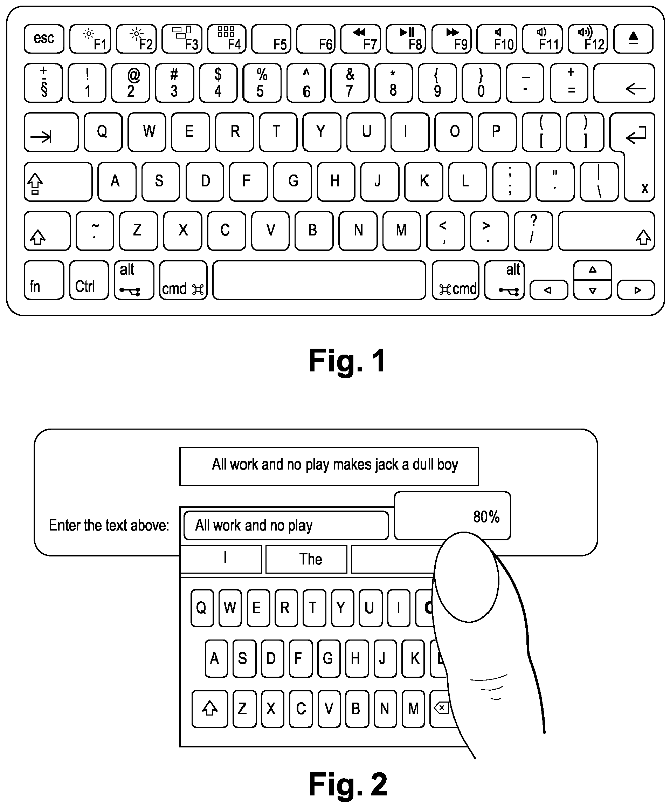

Figure 1 represents a Qwerty keyboard.

The invention consists in presenting to the user a string of characters that he has to type on keys of a keyboard in order to authenticate himself.

Before presenting a string of characters to a user, a learning phase is necessary: the user connects to an external site with his terminal cooperating with a keyboard and words or sentences or strings of characters are presented to him.

He has then to type the presented characters on his keyboard. During this typing, different measures are taken:
a) The duration of the press of different keys ;
b) The duration of the keystroke between consecutive keys ;
c) The duration for typing a sequence of characters.

For a), it will be possible to distinguish two different users by looking the duration each user presses different keys. For a given key, two users will not press the key for the same duration. So, when registering the duration of the presses on different keys (possibly by asking to the user to type a long sentence or a text having a plurality of sentences) it will be possible to known for each user the duration of the press on the different keys (preferably all alphanumerical keys) of his keyboard. The objective is here to maximize later the number of different characters to be typed by the user.

For b), the duration between two consecutive keystrokes are measured. In regard of figure 1, if the user uses only one finger for typing a string of characters, he will need more time to press successively Q and P than to press successively A and L for example. This is also valid when the user uses his two hands for typing text. The objective is here to maximize later the distance between two consecutive characters. It is possible to determine clusters of characters, for example:
Cluster 1 : QWEASDZXC
Cluster 2 : RTYFGHVBN
Cluster 3 : UIOPJKLM

Each of these clusters contains characters that are near each other on the keyboard of figure 1. Later on, for authentication purposes, it will be preferable to ask to the user to enter a character of cluster 1 followed by a character of cluster 3, followed again by a character of cluster 1, and so on (for example the string "QUWIEO"). This will maximize the duration of the keystroke (the flight) between consecutive keys in order to better distinguish two different users.

Point c) is a consequence of points a) and b). The objective is here to ask to the user to type long words (for example "encapsulation"). This will permit later to authenticate a user thanks to long words.

The durations of points a, b and c are weighted for each user between 0% and 100%, the sum of the weights being equal to 100%.

After this learning phase (or enrolment phase), an authentication of the user can be done. For that, when the user wants to connect to an Internet site, after having entered a login, a string of characters as shown in figure 2 is presented to him. In this example, the user has made a learning phase with his mobile terminal.

According to the invention, the string of characters presented to the user diversifies at the maximum the above mentioned durations that characterize precisely this user in order to authenticate the user through his behaviour when typing the string of characters with the lowest number of characters.

Here the string of characters is a proverb (All work and no play makes jack a dull boy). This text is displayed to the user in the form of an uncopyable text, for example on the terminal (mobile terminal) he is using. It can also be sent to him per SMS on his handset and he will have to type this proverb on another keyboard that he has used for the learning phase.

The "text entering" authentication is cloud based. By analyzing the different durations mentioned above when the user is typing this proverb, a cloud based algorithm is able to authenticate the user by comparing his keystrokes (the durations) with those registered during the learning phase. Here, the user has been authenticated at 80% after having only entered the terms "All work and no play". An authentication of 100% is not absolutely necessary, the aim of the invention being to reach a good level of confidence in the authentication.

Since the entering of text is independent of the type of terminal (for example a mobile terminal) and since the mechanism of "text entering" authentication is cloud based, this mechanism can be used to authenticate the user for web application or mobile service provider application. When the keyboard is a capacitive keyboard (like shown in figure 2), the strength of the pressure of different keys can also be taken in account. The parameter of strength of pressure on the different keys is then added to the above mentioned durations. It is an additional parameter.

The invention also concerns a cloud based algorithm for generating strings of characters to be displayed to a user of a terminal in order to authenticate the user through the analysis of his behaviour when typing the strings of characters on keys of a keyboard, the algorithm comprising instructions for generating the string of characters based on measures done earlier during a learning phase during which, for the user, are measured :
a) The duration of the press of different keys ;
b) The duration of the keystroke between consecutive keys ;
c) The duration for typing a sequence of characters ;
the algorithm generating strings of characters to be displayed to the user for authentication purposes taking into account points (a) to (c) for the user, the durations being each weighted between 0% and 100%, the sum of the weights being equal to 100%,
the algorithm diversifying at the maximum the durations that characterize precisely the user in order to authenticate the user through his behaviour when typing the strings of characters with the lowest number of characters.

The main advantage of the invention is that the user does not need anymore to remember a password for being authenticated.

## Claims

1. Method for generating strings of characters to be displayed to a user of a terminal in order to authenticate said user through the analysis of his behaviour when typing said strings of characters on keys of a keyboard, said method comprising, during an earlier learning phase, to measure for said user:
a) The duration of the press of different keys ;
b) The duration of the keystroke between consecutive keys ;
c) The duration for typing a sequence of characters ;
said generation of strings of characters to be displayed to said user for authentication purposes taking into account points (a) to (c) for said user, said durations being each weighted between 0% and 100%, the sum of the weights being equal to 100%,
said generation diversifying at the maximum said durations that characterize precisely said user in order to authenticate said user through his behaviour when typing said strings of characters with the lowest number of characters.

2. Method according to claim 1, wherein said keyboard is a capacitive keyboard and in that the strength of the pressure of different keys is also taken in account.

3. A cloud based algorithm for generating strings of characters to be displayed to a user of a terminal in order to authenticate said user through the analysis of his behaviour when typing said strings of characters on keys of a keyboard, said algorithm comprising instructions for generating said string of characters based on measures done earlier during a learning phase during which, for said user, are measured :
a) The duration of the press of different keys ;
b) The duration of the keystroke between consecutive keys ;
c) The duration for typing a sequence of characters ;
said algorithm generating strings of characters to be displayed to said user for authentication purposes taking into account points (a) to (c) for said user, said durations being each weighted between 0% and 100%, the sum of the weights being equal to 100%,
said algorithm diversifying at the maximum said durations that characterize precisely said user in order to authenticate said user through his behaviour when typing said strings of characters with the lowest number of characters.
